# EUROPEAN PATENT SPECIFICATION

(11) **EP 4 282 246 B1**
(45) Date of publication and mention of the grant of the patent: **04.02.2026**
(21) Application number: 22787288.4
(22) Date of filing: 04.03.2022
(51) Int. Cl.: A01D 34/416, A01D 34/68, A01D 34/90

(54) **GRASS TRIMMER**
GRASSCHNEIDER
COUPE-BORDURE

(30) Priority: 12.04.2021 CN 202110387945
(43) Date of publication of application: 29.11.2023
(73) Proprietor: Nanjing Chervon Industry Co., Ltd., Nanjing, Jiangsu 211106 (CN)
(72) Inventor: YAMAOKA, Toshinari, Nanjing, Jiangsu 211106 (CN); GUO, Jianpeng, Nanjing, Jiangsu 211106 (CN); CHEN, Mingyang, Nanjing, Jiangsu 211106 (CN); LU, Guotai, Nanjing, Jiangsu 211106 (CN)
(74) Representative: Sun, Yiming
(86) International application number: PCT/CN2022/079355
(87) International publication number: WO 2022/218058

(56) References cited:
- AU-A4- 2016 100 770
- CN-A- 106 921 263
- CN-A- 108 718 657
- CN-A- 109 691 290
- CN-A- 110 177 455
- CN-A- 110 651 588
- CN-B- 106 921 263
- CN-U- 207 665 488
- CN-U- 212 306 156
- US-A1- 2016 278 288
- US-B1- 8 266 805
- US-B2- 9 517 555

## Description

### TECHNICAL FIELD

The present invention relates to the field of power tools and, in particular, to a string trimmer.

### BACKGROUND

As a garden tool, a string trimmer may be operated by a user to trim a lawn. Generally, the string trimmer includes a drive device and a power supply device, where a connecting assembly is disposed between the drive device and the power supply device and used for being gripped to operate the string trimmer. CN 110 651 588 A describes a string trimmer which comprises a motor, a first shell and a first circuit board. The first shell is provided with a storage cavity for storage of the motor; the first circuit board is electrically connected with the motor. The first shell is further provided with a first airflow inlet, a first airflow outlet and a second airflow outlet, the first airflow inlet is communicated with the interior and the exterior of the first shell, the first airflow outlet is communicated with the interior and the exterior of the first shell, and the second airflow outlet is communicated with the interior and the exterior of the first shell.

Since the string trimmer belongs to a long-rod tool, the string trimmer has a certain weight. To achieve effective trimming, a string trimmer head needs to be lifted to a certain height, which increases the feeling of fatigue of the user during long-term operation. During use, an operator will unconsciously make the string trimmer head touch the ground with time passing by.

Moreover, during use of the string trimmer, no matter whether a string trimmer line is released in a manual or automatic manner, the string trimmer head inevitably touches the ground. This inevitably aggravates the wear of the string trimmer head rotating at a high speed. Then, the service life of the string trimmer is affected.

Meanwhile, the heat dissipation efficiency of the string trimmer during use also affects the working efficiency and the service life of the whole string trimmer.

How to provide a string trimmer convenient for the user to operate and capable of reducing the feeling of fatigue and ensuring the service life is an urgent technical problem to be solved.

### SUMMARY

To solve the shortcomings of the related art, an object of the present invention is to provide a string trimmer which is convenient for a user to operate and can reduce a feeling of fatigue, prevent the wear of a string trimmer head touching the ground, and improve heat dissipation efficiency.

To achieve the preceding object, the present invention adopts the technical solutions below. The present invention is defined by the independent claim. Advantageous embodiments are described in the dependent claims.

### BRIEF DESCRIPTION OF DRAWINGS

FIG. 1 is a perspective view of a string trimmer;
FIG. 2 is a perspective view of a handle portion of the string trimmer of FIG. 1;
FIG. 3 is an exploded view of an arm rest portion of the string trimmer of FIG. 2;
FIG. 4 is a perspective view of a handle portion of the string trimmer of FIG. 1 from another angle;
FIG. 5 is a sectional view of a first housing of the string trimmer of FIG. 1;
FIG. 6 is a sectional view of the string trimmer of FIG. 1;
FIG. 7 is a perspective view of a string trimmer head of the string trimmer of FIG. 1;
FIG. 8 is a sectional view of the string trimmer head of the string trimmer of FIG. 7;
FIG. 9 is an exploded view of the string trimmer head of the string trimmer of FIG. 7;
FIG. 10 is an exploded view of the string trimmer head of the string trimmer of FIG. 7 from another angle; and
FIG. 11 is a schematic view of another example of the string trimmer head of the string trimmer of FIG. 7.

### DETAILED DESCRIPTION

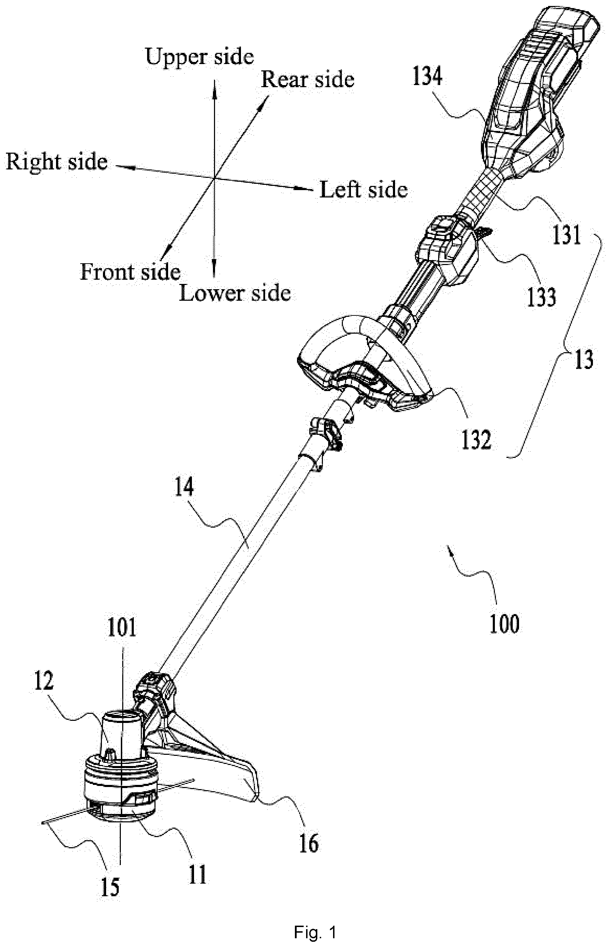

FIG. 1 shows a string trimmer 100 including a string trimmer head 11, a drive device 12, an operating device 13, and a connecting device 14.

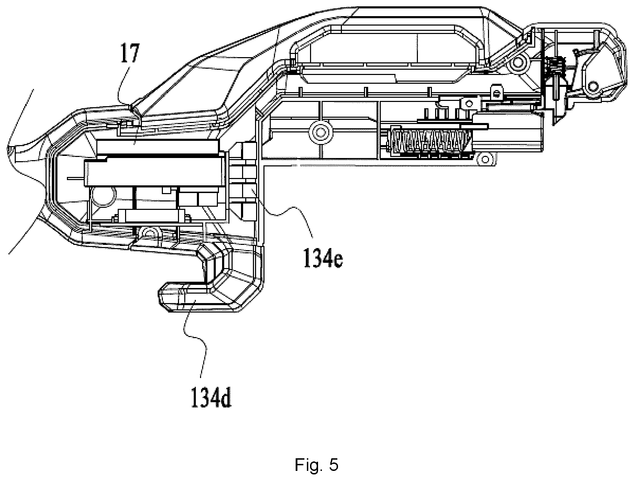

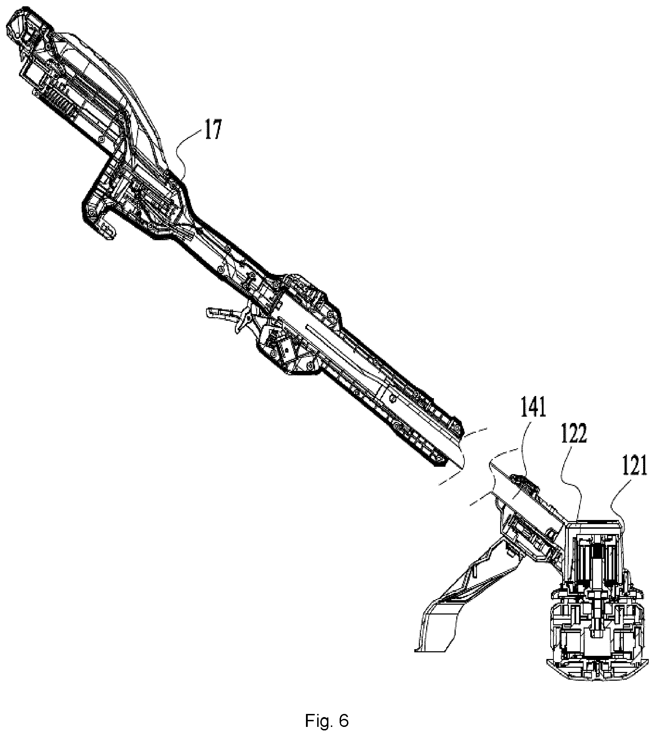

As shown in FIGS. 1 to 6, the string trimmer head 11 is used for mounting a string trimmer line 15 to implement a trimming function. The drive device 12 is used for providing power for the string trimmer head 11 to rotate. The drive device 12 includes a motor 121 and a second housing 122, where the motor 121 is disposed in the second housing 122 and drives the string trimmer head 11 to rotate about a first axis 101. The operating device 13 includes a handle 131, an auxiliary handle 132, a main switch 133, and a first housing 134. The handle 131 and the auxiliary handle 132 are held by hands of the user separately so that the string trimmer 100 can be operated more stably. The main switch 133 may be disposed on the handle 131, and the user can directly operate the main switch 133 when holding the handle 131 to control the string trimmer 100 to trim grass. The handle 131 is covered with soft rubber, and a pattern is provided on the surface of the soft rubber. In this example, the handle 131 and the first housing 134 are formed separately. **It** is to be understood that in some other examples, the handle 131 may be integrally formed with the first housing 134. The connecting device 14 includes a connecting rod 141 for connecting the second housing 122 to the first housing 134. The auxiliary handle 132 is detachably mounted to the connecting rod 141. The auxiliary handle 132 is also disposed between the second housing 122 and the first housing 134, and its mounting position is adjusted according to different use requirements of the user. The auxiliary handle 132 is also used for hanging the string trimmer 100 on a storage hook. The string trimmer 100 further includes a shield 16 at least partially distributed around the string trimmer head 11. When the string trimmer head 11 is trimming grass, the shield 16 can prevent grass crumbs from flying towards where an operator stands.

When the user operates the string trimmer 100, the user holds the handle 131 and the main switch 133 to control the motor 121 to start for trimming. In this case, if an elbow of the user is in a suspended state for a long time, the user has a relatively strong feeling of fatigue. At this time, the user supports the elbow with the first housing 134 as a fulcrum. However, when the elbow is supported with the first housing 134 as the fulcrum and a position of the handle 131 where the main switch 133 is located is held, the string trimmer head 11 and the drive device 12 are relatively far away from the position held by the user and a position of the first housing 134 in contact with the elbow is relatively close to the position held by the user. Therefore, to maintain a balance of the whole string trimmer 100, it can be known from the lever principle that a force at a contact point between the elbow of the user and the first housing 134 needs to overcome the torque generated by the string trimmer head 11 and the drive device 12 under the action of gravity. Thus, during long-term operation, an arm and the elbow of the user are sore due to a continuous force between the arm and the elbow of the user and the first housing 134, and the arm and the elbow are squeezed by the first housing 134 for a long term, which reduces operation experience and is not conducive to the long-term operation of the string trimmer 100.

The first housing 134 is provided with an arm rest portion 135 to be rested on. The arm rest portion 135 can adapt to the shape of the arm and the elbow of the user and is substantially oblique relative to an extension direction of the connecting rod 141. As an implementation, a pad 136 is also provided that mates with the arm rest portion 135. Specifically, the pad 136 is configured to cover at least part of the arm rest portion 135 and is optionally made of TPE (polyvinyl chloride).

Specifically, the pad 136 is attached to an outer surface of the first housing 134 and has a preset thickness. Specifically, the average thickness of the pad 136 along a direction in which the pad is squeezed into deformation and restored from deformation is greater than or equal to 1.5 mm and less than or equal to 30 mm. It is to be explained that to adapt to the structure of the outer surface of the first housing 134, the pad 136 has a relatively large thickness on some sections and a relative small thickness on some sections, the average thickness of the pad 136 is only an average thickness of the pad 136 laid flat, and the pad is not theoretically average everywhere.

To clearly describe technical solutions of the present application, an upper side, a lower side, a left side, a right side, a front side, and a rear side are also defined, as shown in FIG. 1. In an up and down direction, the pad 136 at least partially covers the outer surface of the first housing 134. A groove 136a recessed downwards is provided on a surface of the pad 136, and the groove 136a can adapt to the shape of the arm and the elbow. The groove 136a extends along an extension direction of the pad 136 so that arms and elbows of different users, particularly the elbows, can be at least partially surrounded by the groove 136a. Ridges 136b for enhancing the adhesion between the pad 136 and the elbow are further provided in the groove 136a. The ridges 136b extend along a direction perpendicular to the extension direction of the connecting rod 141 and are disposed in the groove 136a. The extension direction of the pad 136 obliquely intersects the extension direction of the connecting rod 141 at an acute angle α greater than or equal to 10° and less than or equal to 60°. With such arrangement, when the user operates the string trimmer 100, the arm and the elbow adhere to the pad 136 at a more comfortable and appropriate angle and can be in a relatively appropriate state even if the arm and the elbow are in contact with the pad 136 for a long time, thereby increasing the comfort of operation of the user. The pad 136 is also configured to have preset hardness so that when the arm and the elbow are squeezed against the pad 136, the pad 136 generates a certain amount of deformation. Specifically, when the pad 136 is configured to have the preset hardness and squeezed by the arm and the elbow, an amount of deformation of the pad 136 in a direction perpendicular to the surface of the pad 136 is greater than or equal to 0.5 mm and less than or equal to 25 mm. With the preceding setting of numerical values, when squeezed by the arm and the elbow, the pad 136 maintains a certain thickness to ensure certain strength of the pad 136 and is also configured to have certain adaptability to ensure that the pad 136 can adapt to the appearance of the arm and the elbow when the arm and the elbow adhere to the pad 136, thereby better wrapping the arm and the elbow. Further, the pad 136 is also configured to have certain elasticity so that the pad 136 can automatically return to an original state after being squeezed and deformed.

As an implementation, the pad 136 includes a first material layer and a second material layer. The first material layer has greater hardness than the second material layer. The first material layer is made of leather and the second material layer is made of a soft material. The second material layer can ensure a certain amount of deformation of the pad 136, and the first material layer enables the pad 136 to have certain strength.

In this example, the arm rest portion 135 is a component of the first housing 134. The pad 136 is detachably connected to the arm rest portion 135 to facilitate the rapid replacement of the pad 136.

As an alternative example of the solution, the arm rest portion 135 adopts an elastically deformable material and may be integrally formed with or fixedly connected to the pad 136, that is, the arm rest portion 135 and the pad 136 constitute an integral component. The arm rest portion 135 is the component of the first housing 134 and detachably connected to the first housing 134. Specifically, the arm rest portion 135 may form the component of the first housing 134 by using a screw or a snap or in another connection manner, and details are not repeated here.

The first housing 134 includes a coupling portion for coupling a power supply device, the power supply device includes a battery pack, and the coupling portion can couple the battery pack for supplying power to the string trimmer 100. To form the coupling portion for connecting a power supply assembly, the first housing 134 is formed with a protrusion portion 134a protruding out of the extension direction of the connecting rod 141. The first housing 134 is further formed with a connecting portion 134b connected to the connecting rod 141, and a buffer portion 134c is further provided between the protrusion portion 134a and the connecting portion 134b, where the buffer portion 134c is disposed between the connecting portion 134b and the arm rest portion 135. The buffer portion 134c is obliquely disposed relative to the extension direction of the connecting rod 141 and forms a curved portion adapting to the elbow.

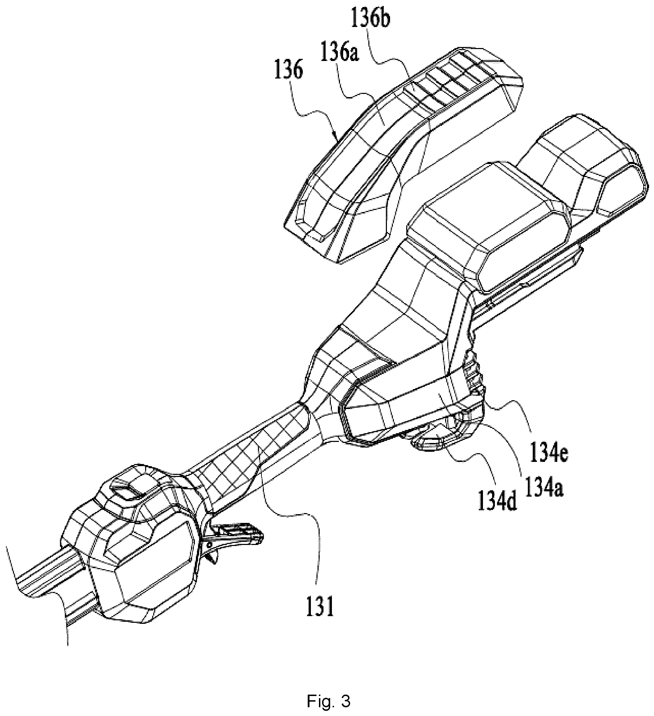

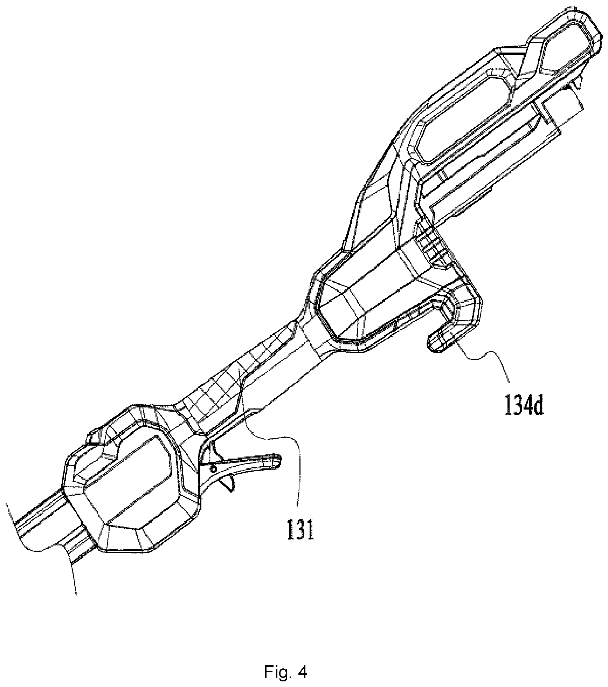

As shown in FIGS. 3 and 4, the first housing 134 is further formed with a hook portion 134d. Specifically, a protrusion is disposed on a side of the first housing 134 facing away from the pad 136, and the protrusion extends a preset distance along the extension direction of the connecting rod 141 to form the hook portion 134d. The hook portion 134d may be used for hanging the string trimmer 100 along the extension direction of the connecting rod 141. Since the string trimmer 100 has a certain weight, the hook portion 134d is required to have certain strength when the string trimmer 100 is hung. Therefore, in this example, the protrusion portion 134a also extends a preset length along the direction perpendicular to the extension direction of the connecting rod 141 so that a dimension of the hook portion 134d can be effectively increased. As an implementation, a reinforcing rib or member may be attached to or disposed on a surface of the hook portion 134d, thereby preventing the surface of the hook portion 134d from being worn.

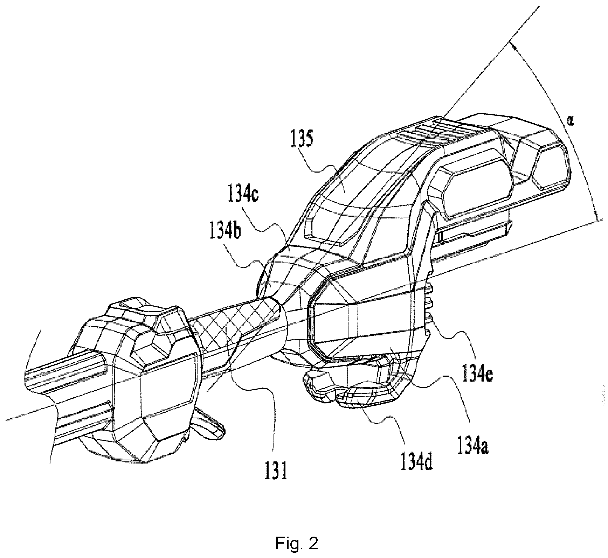

As shown in FIGS. 2 to 6, the first housing 134 is further provided with an air inlet 134e disposed on the protrusion portion 134a of the first housing 134 and specifically disposed on a side of the protrusion portion 134a facing the coupling portion. More specifically, the air inlet 134e is disposed on the rear side of the protrusion portion 134a and the front side of the coupling portion, and the air inlet 134e opens in a direction away from the connecting device. When the string trimmer 100 is in a working state, the rotation of the motor 121 drives a fan disposed on the motor 121 to rotate synchronously so that a heat dissipation air path is formed among the first housing 134, the connecting rod 141, and the second housing 122. Specifically, the connecting rod 141 is hollow and communicates with an internal space of the second housing 122 and an internal space of the first housing 134 separately when the connecting rod 141 connects the second housing 122 to the first housing 134 so that when the motor 121 drives the fan to rotate, heat dissipation air is generated that flows in from the air inlet 134e, flows through the first housing 134, the connecting rod 141, and the second housing 122, and flows out from the second housing 122.

The string trimmer 100 further includes a control circuit board 17. As an implementation, the control circuit board 17 is disposed in the protrusion portion 134a of the first housing 134. Specifically, an accommodation space is formed inside the protrusion portion 134a, and the control circuit board 17 is accommodated in the accommodation space. The control circuit board 17 is disposed on the heat dissipation air path so that when the motor 121 drives the fan to rotate, heat on the control circuit board 17 can be efficiently taken away by the heat dissipating air. Specifically, in this example, the control circuit board 17 is disposed at a front end of the air inlet 134e, the control circuit board 17 is disposed along a direction substantially parallel to the extension direction of the connecting rod 141, and in a linear direction perpendicular to an extension plane of the control circuit board 17, the extension plane of the control circuit board 17 at least partially coincides with the coupling portion. In other alternative examples, the control circuit board 17 is disposed along a direction obliquely intersecting the extension direction of the connecting rod 141. In fact, in this example, the air inlet 134e is disposed at a position of the first housing 134 closer to the front end, and the control circuit board 17 is also disposed in the first housing 134 and at a position closer to the front end so that the heat dissipation air path can be effectively shortened, thereby improving heat dissipation efficiency.

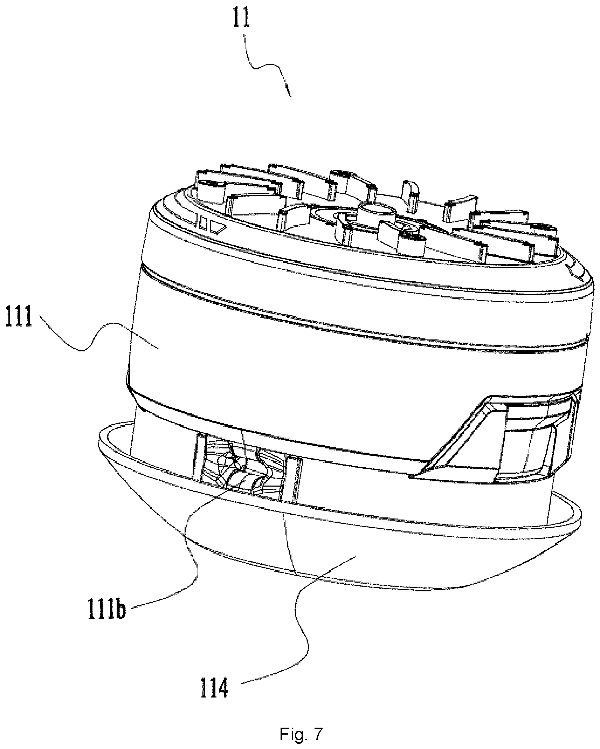

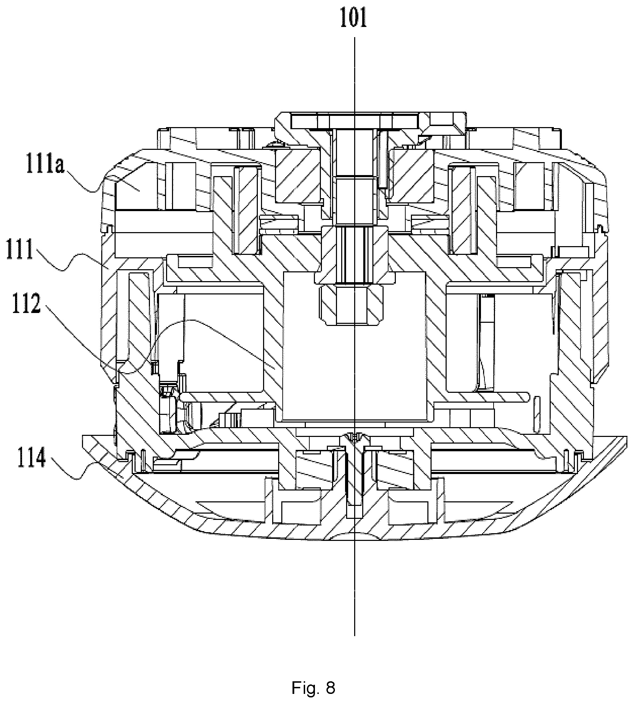

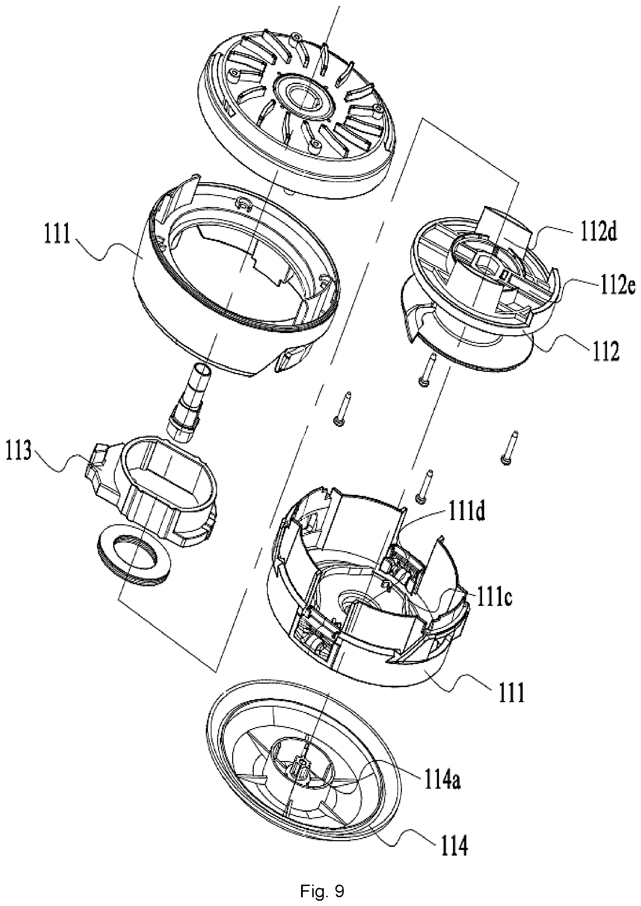

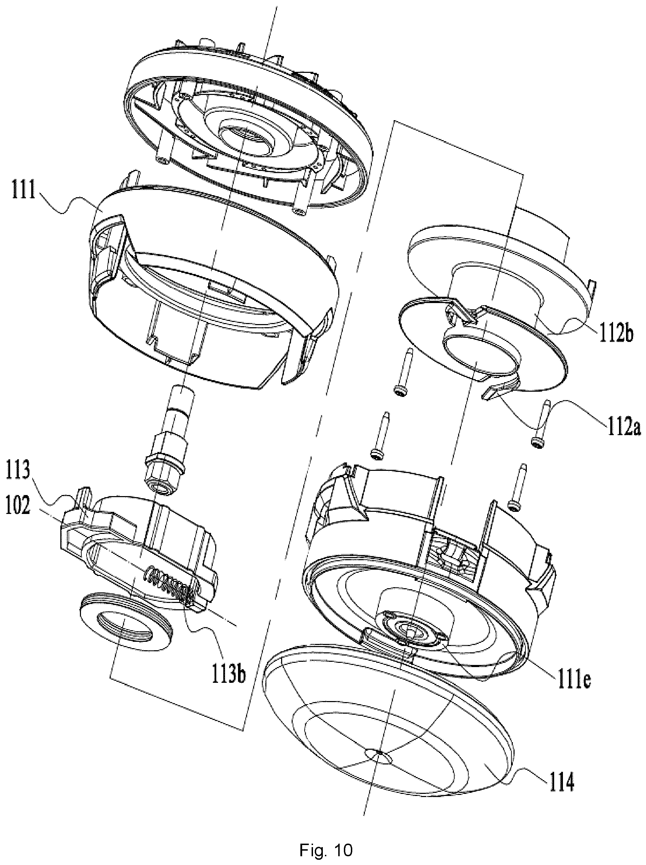

As shown in FIGS. 1 to 10, the string trimmer head 11 includes a head housing 111 and a spool 112. The head housing 111 is composed of two housing parts connected to form a whole surrounding the first axis 101 and having an accommodation space 111a capable of accommodating at least part of the spool 112. A side of the head housing 111 where the accommodation space 111a is formed is an inner side of the head housing 111, and the other side of the head housing 111 opposite to the inner side is an outer side. The two housing parts of the head housing 111 are connected to form the whole including a bottom portion and a side portion surrounding an outer circumference of the bottom portion. The spool 112 is disposed in the accommodation space 111a, that is to say, the spool 112 is disposed on the inner side of the head housing 111. The spool 112 is used for the string trimmer line 15 to be wound around, and the string trimmer line 15 is used for trimming. The head housing 111 is further formed with threading holes 111b for the string trimmer line 15 to extend to the outer side of the head housing 111. Optionally, two threading holes 111b are provided. The head housing 111 is further formed with a guide mechanism 111c for guiding the string trimmer line 15 to enter from one of the threading holes 111b and exit from the other of the threading holes 111b. The spool 112 is provided with line hook portions 112a and a winding groove 112b, where the line hook portions 112a are capable of guiding the string trimmer line 15 in the guide mechanism 111c into the winding groove 112b. When the spool 112 and the head housing 111 generate a relative rotation, the string trimmer line 15 is wound into the winding groove 112b.

In this example, an automatic line release structure is further provided between the spool 112 and the head housing 111. Specifically, the string trimmer head 11 includes a transmission member 113 disposed between the head housing 111 and the spool 112, where the transmission member 113 is capable of transmitting power between the head housing 111 and the spool 112 and has a first position for preventing the relative rotation between the spool 112 and the head housing 111 and a second position for allowing the relative rotation between the spool 112 and the head housing 111.

In this example, the motor 121 can drive the spool 112 to rotate. When the transmission member 113 is at the first position, the spool 112 and the head housing 111 are relatively stationary. Thus, the spool 112 and the head housing 111 are driven by the motor 121 to rotate synchronously so that the length of an effective part of the string trimmer line 15, which is currently wound onto the spool 112, extending out of the head housing 111 does not change, that is to say, the string trimmer line 15 cannot be released and implements trimming. In this case, the string trimmer is in the working state. The string trimmer line 15 extends a preset distance through the threading holes 111b. When the string trimmer line 15 is in contact with vegetation and shortened due to wear, the part of the string trimmer line 15 exposed outside the threading holes 111b of the string trimmer head 11 becomes shorter, and a centrifugal force of the string trimmer line 15 in a high-speed rotation state becomes smaller so that a load of the motor 121 becomes smaller. At this time, the transmission member 113 automatically moves from the first position to the second position, and the spool 112 and the head housing 111 may move relatively. Thus, the string trimmer line 15 is thrown out of the spool 112 under the action of the centrifugal force of the string trimmer line 15 so that the string trimmer line 15 is released and the length of the effective part of the string trimmer line 15 increases. The string trimmer line 15 of a preset length is automatically thrown out under the action of the centrifugal force, thereby achieving an automatic line release.

In some optional examples, when the transmission member 113 is at the first position, the transmission member 113 rotates synchronously with the spool 112, and the transmission member 113 mates with the head housing 111 to drive the head housing 111 to rotate synchronously with the spool 112; when the transmission member 113 is at the second position, the transmission member 113 rotates with the spool 112, and the transmission member 113 is disengaged from the head housing 111 so that the spool 112 and the head housing 111 can move relatively.

Specifically, in a direction of a second axis 102 substantially perpendicular to the first axis 101 or obliquely intersecting the first axis 101, the transmission member 113 is disposed between the spool 112 and the head housing 111 along the direction of the second axis 102. A motor shaft of the motor 121 rotates synchronously with the spool 112. The transmission member 113 is provided with a transmission hole through which the transmission member 113 is sleeved on the spool 112 and can rotate synchronously with the spool 112. Thus, when the motor shaft of the motor 121 drives the spool 112 to rotate, the transmission member 113 can rotate synchronously with the spool 112. In fact, the spool 112 is further formed with or connected to a limiting portion 112d capable of limiting a displacement of the transmission member 113 in a circumferential direction around the first axis 101. Specifically, the limiting portion 112d is a pair of protrusions disposed symmetrically with a plane passing through the second axis 102 as a plane of symmetry, and the transmission member 113 can be limited within the range of the limiting portion 112d when sleeved on the spool 112 along the direction of the first axis 101. The transmission member 113 is asymmetric in mass distribution relative to a plane of symmetry passing through the first axis 101. Further, the center of gravity of the transmission member 113 deviates from the plane of symmetry. A biasing element 113b is further provided between the transmission member 113 and the spool 112, where the biasing element 113b may specifically be a coil spring.

More specifically, an accommodation groove 112e extends on the spool 112, the coil spring is at least partially disposed in the accommodation groove 112e, an end of the coil spring abuts against the bottom of the accommodation groove 112e, and the other end of the coil spring abuts against the transmission member 113. The center of gravity of the transmission member 113 and the coil spring are disposed on two sides of the first axis 101. Additionally, the limiting portion 112d mates with the accommodation groove 112e to form a slide rail for the transmission member 113 to slide, that is, the transmission member 113 is slidably connected to the spool 112. When the transmission member 113 rotates with the spool 112, the transmission member 113 generates the centrifugal force while the transmission member 113 is subjected to a biasing force of the biasing element 113b, where the biasing force and the centrifugal force have opposite directions. The directions of the centrifugal force and the biasing force may further be the direction of the second axis 102, and the transmission member 113 may be slidably connected to the spool 112 along the direction of the second axis 102. The center of gravity of the transmission member 113 and the biasing element 113b are disposed on two sides of a plane passing through the first axis 101 and perpendicular to the second axis 102, separately. It is to be understood that when moving relative to the spool 112 along the direction of the second axis 102, the transmission member 113 is also subjected to a frictional force between the transmission member 113 and the spool 112, where the frictional force can effectively prevent the biasing element 113b from overcoming the centrifugal force and prevent the transmission member 113 from being too flexible and releasing the string trimmer line by mistake.

When the transmission member 113 rotates with the spool 112 at a constant speed, an interaction force F exists between the transmission member 113 and a mating portion of the head housing 111. During the rotation of the string trimmer head 11, torque outputted by the string trimmer head 11 changes with the length of the string trimmer line 15. It is to be understood that the longer the string trimmer line 15, the greater the torque outputted by the string trimmer head 11 and the greater the interaction force between the transmission member 113 and the head housing 111; conversely, the shorter the string trimmer line 15, the smaller the torque outputted by the string trimmer head 11 and the smaller the interaction force between the transmission member 113 and the head housing 111. The centrifugal force of the transmission member 113 is opposite to the force F between the transmission member 113 and the head housing 111. When the centrifugal force of the transmission member 113 is smaller than the force F, the transmission member 113 is at the first position. As the force F decreases, when the centrifugal force of the transmission member 113 is greater than the force F, the transmission member 113 is at the second position, and the string trimmer line 15 is released under the action of the centrifugal force.

In this example, the string trimmer head 11 further includes an anti-wear cover 114 disposed at an end of the head housing 111 facing away from the motor 121 and the spool 112. The head housing includes the bottom portion and the side portion surrounding the outer circumference of the bottom portion. In this example, the bottom portion of the head housing 111 is provided with a connecting hole 111d for connecting the anti-wear cover 114, a bearing 111e is provided in the connecting hole 111d, and the anti-wear cover 114 is provided with a rotating shaft 114a that may be configured to mate with the bearing 111e to rotate freely about an axis. In this example, the anti-wear cover 114 is coaxial with the head housing 111. The anti-wear cover 114 is further configured to be distributed around the head housing 111, cover at least part of the bottom portion of the head housing 111, and surround at least an edge of the bottom portion of the head housing 111. That is, when the string trimmer head 11 is in contact with the ground, the anti-wear cover 114 is firstly in contact with the ground and can rotate relative to the string trimmer head 11. It is to be explained here that the anti-wear cover 114 is configured to isolate the head housing 111 from the ground and make the head housing 111 away from the ground so as to avoid the wear or collision of the string trimmer head in contact with the ground. In this example, the distance between the anti-wear cover 114 and the head housing 111 along the direction of the first axis 101 is less than or equal to 10 mm. The anti-wear cover 114 is made of an anti-wear material with relatively large strength and light in weight, thereby avoiding an indirect increase of the weight of the whole string trimmer head 11 when the anti-wear cover 114 is mounted to the string trimmer head 11. Along the direction of the first axis 101, the area of a projection of the anti-wear cover 114 on a first projection plane perpendicular to the first axis 101 is S1, and the area of a projection of the head housing 111 on the first projection plane is S2. S1 is greater than S2, that is, in the first projection plane perpendicular to the first axis, the area of the projection of the anti-wear cover on the first projection plane along the direction of the first axis 101 is greater than the area of the projection of the head housing on the first projection plane along the direction of the first axis 101. In a direction perpendicular to the first axis 101, a projection of the anti-wear cover 114 on a second projection plane parallel to the first axis 101 at least partially coincides with a projection of the head housing 111 on the second projection plane, that is to say, the anti-wear cover 114 covers part of the side portion of the head housing 111 so that the anti-wear cover 114 can more thoroughly cover the head housing 111.

In fact, in this example, the anti-wear cover 114 covers the whole bottom portion of the head housing 111 so that when the string trimmer head 11 touches the ground, the head housing 111 is not in contact with the ground and is not worn during high-speed rotation. Additionally, since the anti-wear cover 114 and the head housing 111 can rotate relatively, the anti-wear cover 114 does not rotate synchronously with the string trimmer head 11 when the string trimmer head 11 touches the ground, thereby preventing excessive wear of the anti-wear cover 114. Additionally, since the string trimmer 100 in this example adopts a fully-automatic line release structure, the string trimmer line 15 is released only in the case of serious wear and a shortened length, and a false trigger will not occur. Therefore, the string trimmer line 15 is not released when the string trimmer head 11 is in contact with or collides with the ground. In fact, when the string trimmer head is in an autonomous line release state, a displacement of the anti-wear cover along the direction of the first axis is greater than or equal to 0 mm and less than or equal to 5 mm. With the preceding arrangement, when operated, the string trimmer 100 can be placed on the ground and dragged to perform a trimming operation. When the string trimmer is dragged for operation, the feeling of fatigue of the user can be effectively reduced, and long-term operation can be performed in a most labor-saving manner. Additionally, since the anti-wear cover 114 can fully cover the bottom portion of the head housing 111, the string trimmer head 11 can be prevented from wear. Moreover, the anti-wear cover 114 and the string trimmer head 11 can rotate relatively so that friction with the ground is generated only when the string trimmer is dragged, and the wear of the anti-wear cover 114 can be minimized.

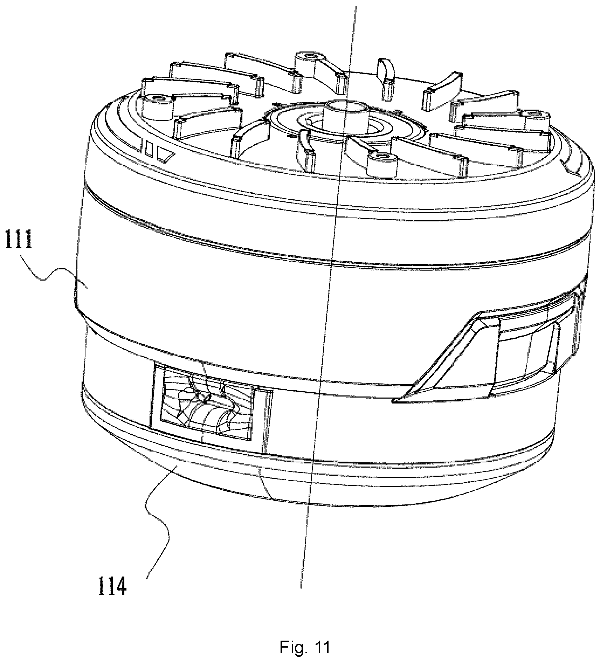

As shown in FIG. 11, as an optional example, along the direction of the first axis 101, the area of the projection of the anti-wear cover 114 on the first projection plane perpendicular to the first axis 101 is S1, and the area of the projection of the head housing 111 on the first projection plane is S2. S1 is substantially equal to S2, that is, in the first projection plane perpendicular to the first axis, the area of the projection of the anti-wear cover on the first projection plane along the direction of the first axis 101 is substantially equal to the area of the projection of the head housing on the first projection plane along the direction of the first axis 101, and the projections of the anti-wear cover and the head housing substantially coincide.

## Claims

1. A string trimmer (100), comprising:
a string trimmer head (11);
a drive device (12) comprising a motor (121) for driving the string trimmer head to rotate about a first axis (101);
an operating device (13) comprising a first housing (134) for connecting a battery pack to supply power to the motor;
a connecting device (14) for connecting the drive device to the operating device; and
a control circuit board (17);
**characterised in that** the first housing is formed with a coupling portion for coupling the battery pack and a connecting portion (134b) connected to the connecting device; wherein an air inlet is further provided between the coupling portion and the connecting portion, wherein the air inlet (134e) communicates with an inside of the first housing;
wherein the connecting device comprises a connecting rod (141), the first housing is provided with a protrusion portion (134a) protruding out of an extension direction of the connecting rod, the air inlet is disposed on the protrusion portion, the air inlet is disposed in front of the coupling portion, the air inlet is disposed on a side of the protrusion portion facing the coupling portion, the control circuit board is accommodated in an accommodation space formed by the protrusion portion, and the control circuit board is disposed at a front end of the air inlet.

2. The string trimmer according to the claim 1, wherein the connecting rod connects the driving device to the operating device, and the connecting rod is hollow and communicates with drive device and the operating device.

3. The string trimmer according to the claim 2, wherein the motor is connected to a fan, and when the motor drives the fan to rotate, a heat dissipation air path is formable that flows in from the air inlet, flows through the connecting rod to the drive device, and flows out from the drive device.

4. The string trimmer according to the claim 1, wherein the air inlet is disposed on the rear side of the protrusion portion.

5. The string trimmer according to the claim 1, wherein the air inlet opens in a direction away from the connecting device.

6. The string trimmer according to the claim 1, wherein the first housing is formed with an arm rest portion (135) for an arm to rest on, and the arm rest portion is disposed behind the connecting portion, provided with a pad (136) covering at least part of the arm rest portion, and configured to be squeezable by the arm when the string trimmer is operated.

7. The string trimmer according to the claim 6, wherein the pad is detachably connected to the arm rest portion, and when the pad is squeezed, an amount of deformation of the pad in a direction perpendicular to a surface of the pad is greater than or equal to 0.5 mm and less than or equal to 25 mm.

8. The string trimmer according to the claim 7, wherein the connecting device comprises a connecting rod, and an extension direction of the pad obliquely intersects an extension direction of the connecting rod (141) at an acute angle (α) greater than or equal to 10° and less than or equal to 60°.

## Patentansprüche

1. Fadentrimmer (100), umfassend:
einen Fadentrimmerkopf (11);
eine Antriebseinrichtung (12) mit einem Motor (121) zum Antreiben des Fadentrimmerkopfs in Rotation um eine erste Achse (101);
eine Bedieneinrichtung (13) mit einem ersten Gehäuse (134) zum Anschließen eines Batteriepakets zur Versorgung des Motors mit elektrischer Energie;
eine Verbindungseinrichtung (14) zum Verbinden der Antriebseinrichtung mit der Bedieneinrichtung; und
eine Steuerschaltungsplatine (17);
**dadurch gekennzeichnet, dass** das erste Gehäuse mit einem Kupplungsabschnitt zum Ankoppeln des Batteriepakets und eines Verbindungsabschnitts (134b), der mit der Verbindungseinrichtung verbunden ist, ausgebildet ist, wobei zwischen dem Kupplungsabschnitt und dem Verbindungsabschnitt ferner ein Lufteinlass vorgesehen ist, wobei der Lufteinlass (134e) mit einem Inneren des ersten Gehäuses in Strömungsverbindung steht;
wobei die Verbindungseinrichtung eine Verbindungsstange (141) umfasst, wobei das erste Gehäuse mit einem Vorsprungabschnitt (134a) versehen ist, der aus einer Erstreckungsrichtung der Verbindungsstange hervorragt, wobei der Lufteinlass an dem Vorsprungabschnitt angeordnet ist, wobei der Lufteinlass vor dem Kupplungsabschnitt angeordnet ist, wobei der Lufteinlass an einer dem Kupplungsabschnitt zugewandten Seite des Vorsprungabschnitts angeordnet ist, wobei die Steuerschaltungsplatine in einem durch den Vorsprungabschnitt gebildeten Aufnahmeraum aufgenommen ist und wobei die Steuerschaltungsplatine an einem vorderen Ende des Lufteinlasses angeordnet ist.

2. Fadentrimmer nach Anspruch 1, wobei die Verbindungsstange die Antriebseinrichtung mit der Bedieneinrichtung verbindet und die Verbindungsstange hohl ist und mit der Antriebseinrichtung und der Bedieneinrichtung in Strömungsverbindung steht.

3. Fadentrimmer nach Anspruch 2, wobei der Motor mit einem Lüfter verbunden ist und, wenn der Motor den Lüfter in Rotation antreibt, ein Wärmeabfuhr-Luftpfad ausbildbar ist, der vom Lufteinlass einströmt, durch die Verbindungsstange zur Antriebseinrichtung hindurchströmt und aus der Antriebseinrichtung ausströmt.

4. Fadentrimmer nach Anspruch 1, wobei der Lufteinlass auf der Rückseite des Vorsprungabschnitts angeordnet ist.

5. Fadentrimmer nach Anspruch 1, wobei der Lufteinlass in eine von der Verbindungseinrichtung wegweisende Richtung geöffnet ist.

6. Fadentrimmer nach Anspruch 1, wobei das erste Gehäuse mit einem Armauflageabschnitt (135) zum Abstützen eines Arms ausgebildet ist und der Armauflageabschnitt hinter dem Verbindungsabschnitt angeordnet ist, mit einem Polster (136) versehen ist, das zumindest einen Teil des Armauflageabschnitts abdeckt, und wobei das Polster so ausgebildet ist, dass es beim Betrieb des Fadentrimmers von dem Arm zusammengedrückt werden kann.

7. Fadentrimmer nach Anspruch 6, wobei das Polster lösbar mit dem Armauflageabschnitt verbunden ist und, wenn das Polster zusammengedrückt wird, ein Verformungsbetrag des Polsters in einer zur Oberfläche des Polsters senkrechten Richtung größer oder gleich 0,5 mm und kleiner oder gleich 25 mm ist.

8. Fadentrimmer nach Anspruch 7, wobei die Verbindungseinrichtung eine Verbindungsstange umfasst und eine Erstreckungsrichtung des Polsters eine Erstreckungsrichtung der Verbindungsstange (141) unter einem spitzen Winkel (α) schräg schneidet, der größer oder gleich 10° und kleiner oder gleich 60° ist.

## Revendications

1. Coupe-bordures (100), comprenant :
une tête de coupe-bordures (11) ;
un dispositif d'entraînement (12) comprenant un moteur (121) destiné à entraîner la tête de coupe-bordures à tourner autour d'un premier axe (101) ;
un organe de commande (13) comprenant un premier boîtier (134) pour raccorder un bloc de batteries afin d'alimenter le moteur ;
un dispositif de liaison (14) pour relier le dispositif d'entraînement à l'organe de commande ; et
une carte de circuit de commande (17) ;
**caractérisé en ce que** le premier boîtier est formé avec une portion de couplage pour coupler le bloc de batteries et une portion de connexion (134b) reliée au dispositif de liaison, un orifice d'admission d'air étant en outre prévu entre la portion de couplage et la portion de connexion, l'orifice d'admission d'air (134e) communiquant avec un intérieur du premier boîtier ;
le dispositif de liaison comprenant une tige de liaison (141), le premier boîtier étant pourvu d'une portion en saillie (134a) faisant saillie par rapport à une direction d'extension de la tige de liaison, l'orifice d'admission d'air étant disposé sur la portion en saillie, l'orifice d'admission d'air étant disposé devant la portion de couplage, l'orifice d'admission d'air étant disposé sur un côté de la portion en saillie faisant face à la portion de couplage, la carte de circuit de commande étant logée dans un espace de logement formé par la portion en saillie, et la carte de circuit de commande étant disposée à une extrémité avant de l'orifice d'admission d'air.

2. Coupe-bordures selon la revendication 1, dans lequel la tige de liaison relie le dispositif d'entraînement à l'organe de commande, et la tige de liaison est creuse et communique avec le dispositif d'entraînement et l'organe de commande.

3. Coupe-bordures selon la revendication 2, dans lequel le moteur est relié à un ventilateur et, lorsque le moteur entraîne le ventilateur en rotation, un trajet d'air de dissipation de chaleur est formable, qui s'écoule vers l'intérieur à partir de l'orifice d'admission d'air, s'écoule à travers la tige de liaison vers le dispositif d'entraînement et s'écoule vers l'extérieur à partir du dispositif d'entraînement.

4. Coupe-bordures selon la revendication 1, dans lequel l'orifice d'admission d'air est disposé sur le côté arrière de la portion en saillie.

5. Coupe-bordures selon la revendication 1, dans lequel l'orifice d'admission d'air est ouvert dans une direction s'éloignant du dispositif de liaison.

6. Coupe-bordures selon la revendication 1, dans lequel le premier boîtier est formé avec une portion d'appui de bras (135) destinée à recevoir un bras, la portion d'appui de bras étant disposée derrière la portion de connexion, étant pourvue d'un coussinet (136) recouvrant au moins une partie de la portion d'appui de bras, le coussinet étant configuré pour pouvoir être comprimé par le bras lorsque le coupe-bordures est actionné.

7. Coupe-bordures selon la revendication 6, dans lequel le coussinet est relié de manière amovible à la portion d'appui de bras, et, lorsque le coussinet est comprimé, une quantité de déformation du coussinet dans une direction perpendiculaire à une surface du coussinet est supérieure ou égale à 0,5 mm et inférieure ou égale à 25 mm.

8. Coupe-bordures selon la revendication 7, dans lequel le dispositif de liaison comprend une tige de liaison, et une direction d'extension du coussinet coupe obliquement une direction d'extension de la tige de liaison (141) suivant un angle aigu (α) supérieur ou égal à 10° et inférieur ou égal à 60°.
